# FASCICULE DE BREVET EUROPEEN

(11) **EP 0 716 980 B1**
(45) Date de publication et mention de la délivrance du brevet: **05.08.1998**
(21) Numéro de dépôt: 95402609.2
(22) Date de dépôt: 21.11.1995
(51) Int. Cl.: B64D 25/04, B64D 11/06

(54) **Siège anti-écrasement à harnais pour aéronef**
Flugzeug-Unfallsitz mit einem Sicherheitsgurt
Crashworthy aircraft seat with a harness

(30) Priorité: 13.12.1994 FR 9414967
(43) Date de publication de la demande: 19.06.1996
(73) Titulaire: EUROCOPTER, F-13725 Marignane Cédex (FR)
(72) Inventeur: Bellais, Laurent B. F., F-13700 Marignane (FR)
(74) Mandataire: Bonnetat, Christian

(56) Documents cités:
- WO-A-82/01854

## Description

La présente invention concerne un siège anti-écrasement à harnais pour aéronef, destiné à être monté à bord d'hélicoptères ou d'avions.

Dans la présente description, le mot "harnais" désigne de façon générale tout moyen d'attache d'un passager sur son siège, comme par exemple les ceintures de sécurité prévues sur les sièges d'avion, les baudriers de sécurité prévus sur les sièges d'automobiles ou encore les harnais à bretelles associés aux sièges des voitures de course ou aux sièges de pilotes d'aéronef.

Les sièges anti-écrasement, dénommés par les techniciens "sièges anti-crash", équipent notamment les hélicoptères en raison des normes imposées par la réglementation en vigueur, et ont pour but, lors d'un atterrissage brutal, d'absorber les chocs et les déformations dus à l'impact en limitant la décélération des sièges par rapport à la structure de l'hélicoptère, afin de garantir la survie des passagers transportés.

Pour cela, les sièges anti-écrasement actuellement en service sur les hélicoptères sont du type à place individuelle. Chaque siège est monté coulissant, de façon limitée, sur un support au moins sensiblement vertical, solidaire de la structure de l'aéronef et associé à un dispositif absorbeur d'énergie qui est disposé entre le siège et la structure. Ainsi, en cas d'un atterrissage brutal, le dispositif absorbeur d'énergie freine le coulissement du siège par rapport au support, en réduisant alors la décélération dudit siège, c'est-à-dire celle subie par le passager.

Ces sièges anti-écrasement, bien qu'apportant une sécurité appréciable, entraînent néanmoins une masse supplémentaire significative, la réalisation de points d'ancrage sur la structure de l'hélicoptère (un support par siège) et une maintenance plus longue, ce qui pénalise notamment les capacités de transport de l'hélicoptère, ses performances et son coût.

La présente invention a pour but de remédier à ces inconvénients et concerne un siège anti-écrasement pour aéronef, dont la conception permet de réduire sa masse et son coût d'installation, tout en garantissant et en renforçant la résistance aux chocs du siège.

A cet effet, le siège anti-écrasement à harnais pour aéronef, monté coulissant de façon limitée sur au moins un support au moins sensiblement vertical, solidaire de la structure dudit aéronef et associé à au moins un dispositif absorbeur d'énergie, disposé entre ledit siège et ladite structure, est remarquable selon l'invention en ce que :
- il est conformé en banquette définissant une pluralité de places disposées côte à côte et dont chacune est équipée d'un harnais de sécurité ;
- il comporte au moins un dispositif absorbeur d'énergie supplémentaire, situé entre ladite structure de l'aéronef et un mécanisme d'accouplement à verrouillage entre la banquette et le dispositif supplémentaire prévu à au moins l'une desdites places ; et
- ledit mécanisme d'accouplement entre ladite banquette et ledit dispositif supplémentaire est commandé par le harnais associé à ladite place.

Ainsi, grâce à l'invention, une seule et même banquette monocorps permet l'assise de plusieurs passagers, ce qui réduit la masse du siège et les points d'ancrage à réaliser (un ou deux supports pour des banquettes de trois places par exemple), comparativement à l'installation usuelle d'un siège par passager. De plus, la banquette à places multiples permet de prendre en compte le nombre et l'emplacement des passagers présents sur les places grâce au dispositif supplémentaire qui n'est rendu opérationnel que lorsque les harnais associés auxdites places sont enclenchés, et qui participe ainsi activement à l'absorption des chocs en cas d'atterrissage brutal de l'hélicoptère, en plus du dispositif absorbeur d'énergie usuellement installé qui est opérationnel en permanence.

Avantageusement, ledit mécanisme d'accouplement à verrouillage est associé à un mécanisme d'enroulement dudit harnais, fixé à ladite banquette et susceptible de provoquer, lorsque ledit harnais est enclenché, le verrouillage dudit dispositif supplémentaire par ledit mécanisme d'accouplement, pour rendre ledit dispositif supplémentaire opérationnel. Ainsi, on utilise un mécanisme d'enroulement déjà prévu sur le siège pour assurer le verrouillage du dispositif supplémentaire, via un mécanisme d'accouplement, sans recourir au montage d'autres pièces.

De préférence, ledit mécanisme d'accouplement et ledit mécanisme d'enroulement dudit harnais sont prévus au dos de la place correspondante de ladite banquette. Et ledit mécanisme d'accouplement coopère avantageusement avec un axe rotatif dudit mécanisme d'enroulement, de façon à verrouiller ledit dispositif supplémentaire lorsque ledit harnais est mis en place, entraînant la rotation dudit axe.

Plus particulièrement, ledit mécanisme d'accouplement peut comprendre un boîtier, qui est fixé à la place correspondante de ladite banquette et à l'intérieur duquel est prévu un arbre monté sur ledit axe du mécanisme d'enroulement et apte à verrouiller, par son déplacement en translation sous l'action dudit axe rotatif du mécanisme d'enroulement, ledit dispositif supplémentaire. Selon un premier mode de réalisation, ledit arbre du mécanisme d'accouplement s'engage dans une extrémité dudit dispositif supplémentaire pour le verrouiller, lorsque l'axe dudit mécanisme d'enroulement est entraîné en rotation par le déroulement du harnais.

Selon un second mode de réalisation, ledit mécanisme d'accouplement est muni d'un verrou monté pivotant sur ledit boîtier et apte à bloquer ledit dispositif supplémentaire par l'action d'une lame ressort, solidaire dudit arbre du mécanisme d'accouplement et maintenant un pion dudit verrou, lorsque ledit arbre est déplacé en translation par ledit axe du mécanisme d'enroulement.

En outre, ledit dispositif absorbeur d'énergie supplémentaire est relié, par ses extrémités, audit support et audit mécanisme d'accouplement, ledit dispositif absorbeur d'énergie est relié, par ses extrémités, audit support et à ladite banquette, et ledit dispositif absorbeur d'énergie et ledit dispositif absorbeur d'énergie supplémentaire sont définis par des amortisseurs.

Selon un exemple particulier d'agencement, ladite banquette comprend au moins trois places et elle est montée coulissante sur au moins deux supports sensiblement verticaux, deux dispositifs absorbeurs d'énergie étant disposés respectivement entre lesdits supports et le dos de ladite banquette, et au moins deux dispositifs absorbeurs d'énergie supplémentaires étant disposés respectivement entre lesdits supports et lesdits mécanismes d'accouplement prévus au dos des places externes de ladite banquette.

De façon générale, à chacune des places de ladite banquette, peut être associé un dispositif absorbeur d'énergie supplémentaire, susceptible de coopérer avec le harnais correspondant par l'intermédiaire dudit mécanisme d'accouplement à verrouillage.

Les figures du dessin annexé feront bien comprendre comment l'invention peut être réalisée. Sur ces figures, des références identiques désignent des éléments semblables.

La figure 1 montre, en vue arrière, un exemple de réalisation du siège anti-écrasement conforme à l'invention, avec un premier montage du dispositif absorbeur d'énergie supplémentaire.

La figure 2 est une coupe selon la ligne II-II de la figure 1, montrant le mécanisme d'accouplement à verrouillage dudit dispositif supplémentaire et le mécanisme d'enroulement dudit harnais.

La figure 3 est une coupe du siège selon la ligne III-III de la figure 1.

Les figures 4 et 5 représentent respectivement deux modes de réalisation du mécanisme d'accouplement à verrouillage.

Les figures 6A, 6B et 6C illustrent schématiquement le fonctionnement des dispositifs absorbeurs d'énergie en fonction de la position des passagers sur la banquette.

Les figures 7 et 8 montrent, en vue arrière, le siège anti-écrasement respectivement avec un deuxième et troisième montages du dispositif absorbeur d'énergie supplémentaire.

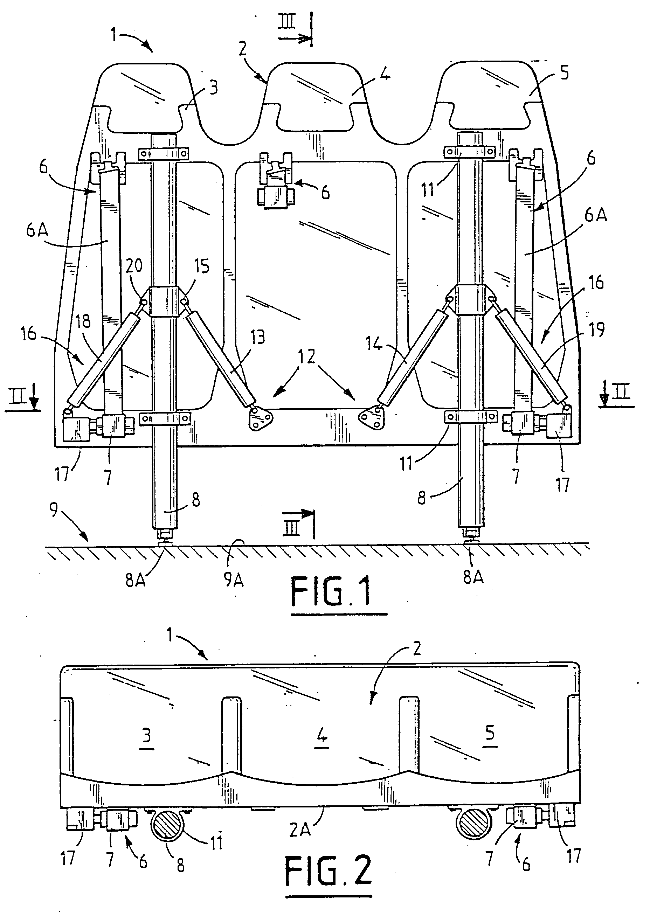

Le siège anti-écrasement 1 pour aéronef, montré sur les figures 1 à 3, se présente selon l'invention sous la forme d'une banquette 2 de préférence rigide, définissant une pluralité de places 3, 4, 5 disposées côte-à-côte de façon frontale et au nombre de trois dans cet exemple de réalisation. Bien entendu, le nombre de places constituées par la banquette pourrait être différent, pour comporter au moins deux places. De façon usuelle, lesdites places de la banquette sont munies de coussins d'assise, de dossiers, d'appuie-têtes et d'accoudoirs contribuant au confort et au maintien des passagers.

Chacune des places est équipée d'un harnais de sécurité 6 de type baudrier, monté sur le dossier 2A de la banquette et comprenant un mécanisme d'enroulement par exemple à inertie 7, fixé à l'arrière du dossier, derrière chaque place. La banquette multiplace 2 est montée coulissante, suivant une course limitée, sur deux supports approximativement verticaux, identiques 8 qui sont solidaires de la structure 9 de l'aéronef 10, tel qu'un hélicoptère, et qui sont situés après montage de la banquette, derrière les places externes 3 et 5 du siège. Ces supports 8 sont constitués par des tubes creux de section cylindrique, sur lesquels est agencée la banquette par l'intermédiaire de paliers 11.

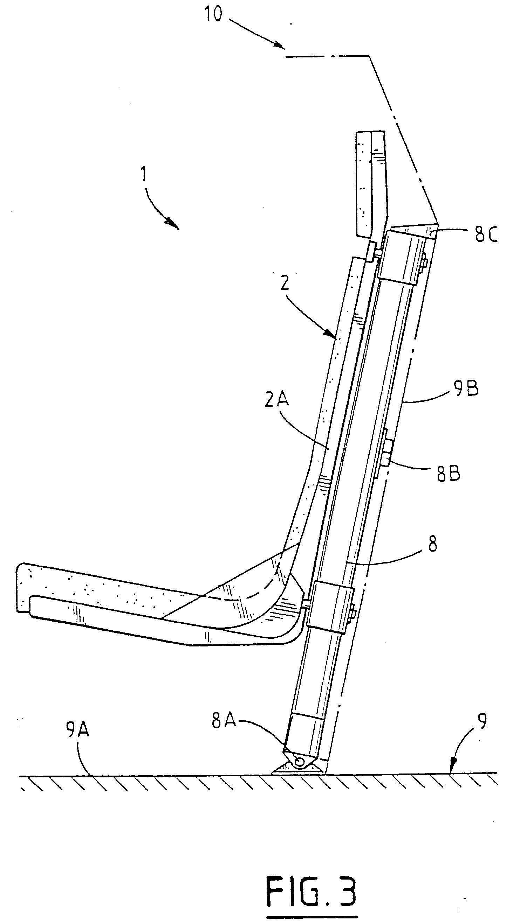

Dans le cas d'un montage sur un hélicoptère, comme montré sur la figure 3, l'extrémité inférieure de chaque support 8 est articulée, par une rotule 8A, sur le plancher 9A de la structure, et des ferrures 8B, 8C, respectivement prévues centralement et à l'extrémité supérieure des supports, associent ces derniers à l'une des cloisons 9B de l'hélicoptère.

En outre, le siège anti-écrasement 1 comprend un dispositif absorbeur d'énergie 12 qui est prévu entre les supports 8 et la banquette multiplace 2. Il comporte par exemple deux amortisseurs 13, 14 dont chacun est disposé entre l'un des supports 8 et le dossier 2A du siège, par l'intermédiaire de liaisons 15. On voit sur la figure 1 que, par rapport au plan de coupe vertical III-III passant par le milieu de la banquette, les deux amortisseurs sont agencés de façon symétriquement inclinée, leurs lignes d'action convergeant vers le plancher 9A de l'hélicoptère. Du point de vue fonctionnel, ces amortisseurs 13, 14 sont opérationnels en permanence, c'est-à-dire qu'en cas d'atterrissage brutal, indépendamment du nombre et de l'emplacement des passagers sur la banquette, ils jouent leur rôle d'absorption d'énergie, en freinant le déplacement de la banquette 2 par rapport aux supports 8. Afin d'éviter tout déclenchement intempestif des seuls amortisseurs 13 et 14 lors de l'assise des passagers, leur seuil de déclenchement est réglé pour supporter au moins la charge de trois (dans cet exemple) passagers pesant près de 100 kg chacun, sous une accélération verticale de plus de 2,5 g.

Avantageusement, le siège anti-écrasement 1 à banquette à places multiples 2 est équipé d'un dispositif absorbeur d'énergie supplémentaire 16, qui est situé alors entre les supports approximativement verticaux 8, solidaires de la structure de l'hélicoptère, et des mécanismes d'accouplement à verrouillage 17 prévus sur le dossier 2A de la banquette. Dans cet exemple de réalisation montré sur la figure 1, le dispositif supplémentaire 16 se compose de deux amortisseurs 18, 19 qui sont agencés symétriquement, de façon inclinée, par rapport au plan vertical médian III-III de la banquette, et du côté opposé aux amortisseurs 13, 14 par rapport auxdits supports 8. D'un côté, les amortisseurs 18, 19 du dispositif supplémentaire sont articulés, par des liaisons 20, aux supports respectifs 8, tandis que, de l'autre côté, ils sont susceptibles d'être associés par verrouillage aux mécanismes d'accouplement correspondants 17, qui sont fixés derrière les places externes 3, 5 de la banquette et qui sont chacun en relation avec le mécanisme d'enroulement 7 du harnais respectif 6. Du point de vue fonctionnel, ces amortisseurs 18, 19 du dispositif supplémentaire 16 sont rendus opérationnels uniquement lorsque les sangles 6A des harnais sont tirées par des passagers assis aux places, ce qui entraîne le verrouillage des amortisseurs par les mécanismes d'accouplement 17, via les mécanismes d'enroulement 7 des harnais 6. Lorsque ces amortisseurs 18, 19 sont verrouillés, leur seuil de déclenchement est réglé pour supporter au moins la charge de trois (dans cet exemple) passagers pesant près de 100 kg chacun, sous une accélération verticale de plus de 5 g par exemple.

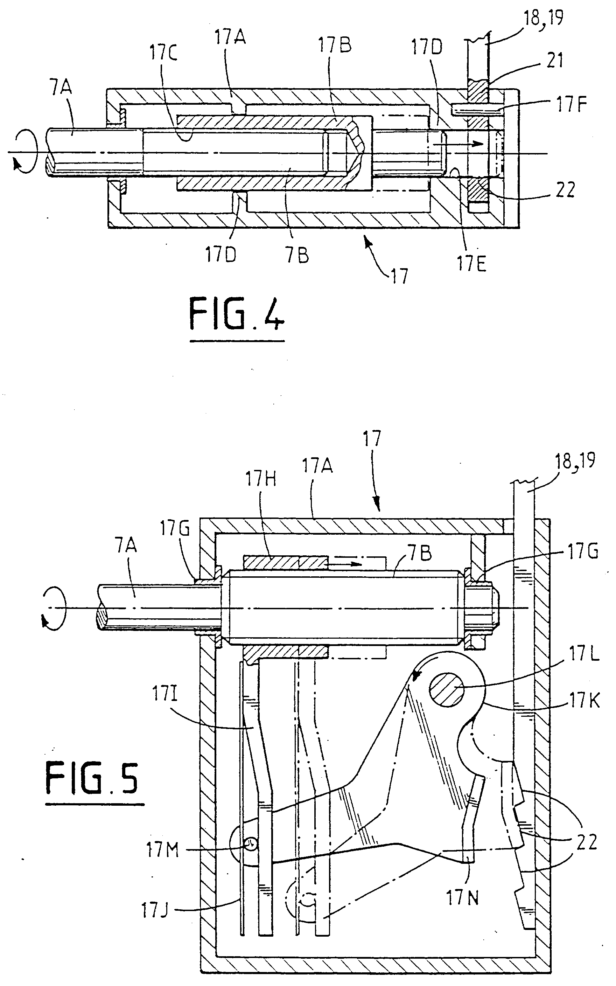

Plus particulièrement, le mécanisme d'accouplement à verrouillage 17 comprend, dans un premier mode de réalisation illustré sur la figure 4, un boîtier 17A qui est fixé au dossier 2A de la banquette, derrière les places correspondantes, dans ce cas 3 et 5. A l'intérieur du boîtier 17A, est prévu un arbre 17B, pourvu d'un trou axial taraudé 17C et porté par des paliers 17D du boîtier. Dans le trou taraudé 17C est vissée l'extrémité filetée 7B de l'axe 7A dudit mécanisme d'enroulement 7, qui s'engage coaxialement à l'arbre 17B dans le boîtier 17A. La liaison entre l'arbre 17B et l'axe 7A est du type glissière, c'est-à-dire que la rotation de l'axe 7A, sous l'action du déroulement de la sangle 6A du harnais, engendre un déplacement en translation de l'arbre 17B monté sur l'axe. L'extrémité correspondante de l'amortisseur 18, 19 dudit dispositif supplémentaire se termine par exemple en forme de chape 21 qui s'engage dans le boîtier 17A, de façon que l'orifice 22 de la chape 21 soit coaxial au passage interne 17E délimité par le palier correspondant 17D portant ledit arbre. Une goupille en matière fusible 17F assure le positionnement de l'amortisseur sur le boîtier. En cas d'absence de passager à cette place, la goupille fusible libère l'amortisseur après dépassement de sa limite au cisaillement.

On comprend donc que la rotation de l'axe 7A du mécanisme d'enroulement 7, par suite du déroulement de la sangle 6A par un passager assis à la place correspondante, entraîne la translation de l'arbre 17B selon la flèche indiquée sur la figure 4, par rapport au boîtier 17A, lequel arbre s'engage alors dans l'orifice 22 de la chape en verrouillant l'amortisseur au boîtier. De la sorte, l'amortisseur est rendu opérationnel. La position de l'arbre 17B immobilisant la chape de l'amortisseur est montrée en traits mixtes sur la figure 4. Bien évidemment, la rotation en sens inverse de l'axe 7A, par suite du retrait de la sangle par le passager lorsqu'il quitte sa place, provoque une translation opposée de l'arbre 17B, ce qui libère alors l'amortisseur en le rendant inopérant.

Dans un second mode de réalisation illustré sur la figure 5, le mécanisme d'accouplement à verrouillage 17 comprend, comme précédemment, un boîtier 17A qui est fixé au dos de la place correspondante et à l'intérieur duquel est engagée l'extrémité filetée 7B de l'axe 7A dudit mécanisme d'enroulement 7. Cette extrémité 7B est portée par deux paliers 17G prévus dans le boîtier. Autour de l'extrémité filetée 7B de l'axe, est vissé un arbre 17H dont la liaison est analogue à celle précédemment décrite. C'est-à-dire qu'un mouvement de rotation de l'axe 7A conduit à un mouvement de translation de l'arbre 17H. Par ailleurs, l'arbre 17H se prolonge par une patte rigide 17I sur laquelle est fixée, d'un côté, une lame élastique 17J. Une pièce formant verrou 17K est en outre montée pivotante autour d'un axe 17L solidaire du boîtier et orthogonale à l'axe 7A. Cette pièce formant verrou présente un pion 17M qui est agencé entre la patte 17I et la lame élastique 17J de l'arbre, en y étant ainsi maintenu par pincement. De plus, la pièce formant verrou 17K comporte une saillie 17N qui est susceptible de coopérer avec des crans 22 terminant, dans ce mode de réalisation, l'extrémité correspondante de l'amortisseur 18, 19.

On comprend donc que, suite à la rotation de l'axe 7A et à la translation de l'arbre 17H, le pion 17M se déplace le long de la patte rigide 17I de l'arbre, ce qui provoque la rotation du verrou 17K autour de son axe 17L et l'engagement de la saillie 17N dans le cran correspondant 22 de l'amortisseur, lequel devient alors opérationnel.

Quels que soient les modes de réalisation utilisés, le verrouillage et le déverrouillage des amortisseurs du dispositif absorbeur d'énergie supplémentaire 16 s'effectuent automatiquement lors de l'action de la sangle 6A, par l'intermédiaire du mécanisme d'accouplement 17 associé à l'axe du mécanisme d'enroulement 7 et agissant sur l'amortisseur concerné.

Le siège anti-écrasement 1 pourvu des dispositifs à absorption d'énergie 12 et 16 est alors conçu pour tenir compte de la disparité des masses en présence sur la banquette, liées aux différentes possibilités d'aménagement avec un, deux ou trois passagers assis. Dans l'exemple décrit ci-dessus, le siège comporte deux amortisseurs 13, 14 opérationnels en permanence à partir d'un seuil de déclenchement prédéterminé, et deux autres amortisseurs 18, 19 rendus opérationnels, là aussi à partir d'un seuil de déclenchement prédéterminé, uniquement lorsque les harnais de sécurité 6 des places externes correspondantes sont enclenchés, signifiant la présence d'un passager. Ces amortisseurs 18, 19 à enclenchement automatique via les mécanismes 7 et 17, présentent une courbe effort/déplacement à caractéristique évolutive, c'est-à-dire que l'effort résistant de chaque amortisseur croît en fonction de son allongement, ce qui optimise la course d'écrasement.

D'une façon générale, lorsque les efforts verticaux subis par les passagers, par suite d'un atterrissage brutal de l'aéronef, deviennent supérieurs aux valeurs admissibles physiologiquement, les dispositifs se déclenchent pour laisser coulisser la banquette le long des supports avec un effort de réaction, lors de leur extension, compatible aux limites acceptables pour les passagers.

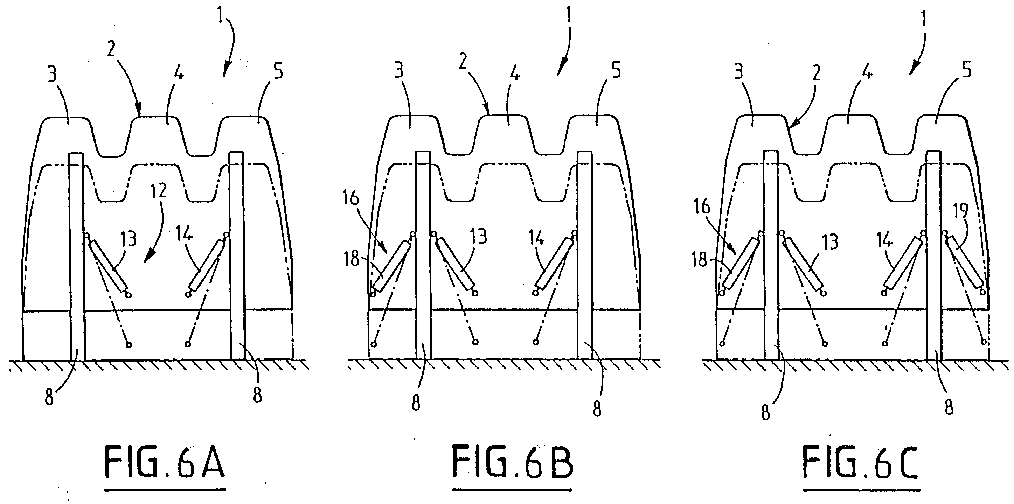

Plus particulièrement, si un passager est installé à la place centrale 4 de la banquette, seuls les deux amortisseurs 13, 14 du dispositif d'absorption d'énergie 12 entrent en action en cas d'atterrissage brutal. Ceux-ci permettent, en s'étendant, d'absorber efficacement les efforts dus aux chocs, en freinant la décélération de la banquette 2 par rapport aux supports 8, comme le montre la figure 6A.

Dans le cas où un passager occupe l'une des places externes 3, 5 de la banquette, en combinaison ou non avec un passager assis à la place centrale 4, les deux amortisseurs 13, 14 du dispositif 12 sont opérationnels, ainsi que l'amortisseur 18 ou 19 du dispositif supplémentaire 16. En effet, comme le montre la figure 6B, la mise en place de la sangle 6A du harnais correspondant a entraîné le verrouillage de l'amortisseur 18 ou 19 sur le mécanisme d'accouplement 17, via la rotation de l'axe 7A du mécanisme d'enroulement 7 du harnais 6.

Dans le cas où deux passagers sont assis aux places externes 3, 5 de la banquette, en combinaison ou non avec un passager assis à la place centrale 4, les deux amortisseurs 13, 14 du dispositif 12 et les deux amortisseurs 18, 19 du dispositif supplémentaire 16 sont alors opérationnels, pour absorber efficacement l'énergie engendré par le choc lors d'un atterrissage brutal de l'hélicoptère, comme le montre la figure 6C.

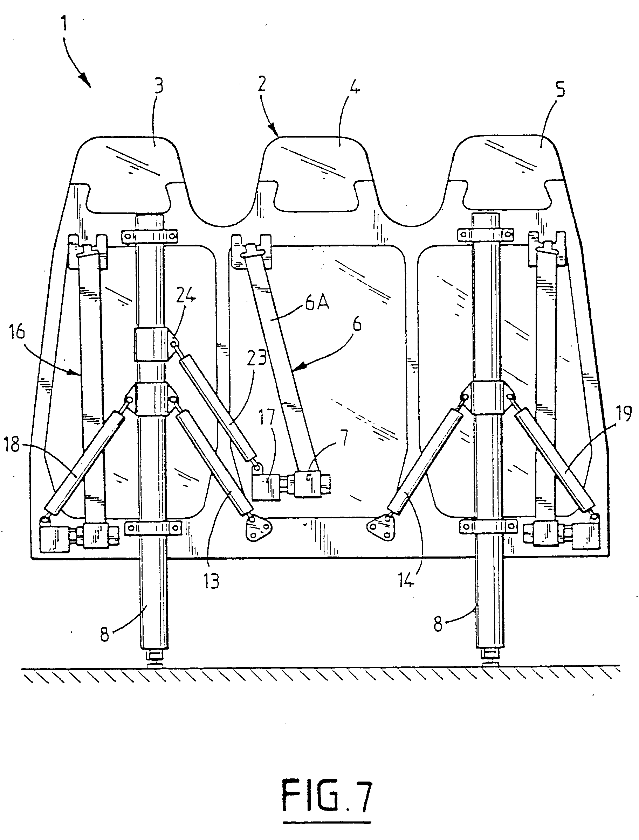

Sur le siège 1 illustré sur la figure 7 et correspondant à celui précédemment décrit, un troisième amortisseur 23 est ajouté au dispositif absorbeur d'énergie 16. On voit que ce troisième amortisseur 23 est disposé entre le support 8, auquel est articulé l'amortisseur 13, et parallèlement à ce dernier, par l'intermédiaire d'une liaison 24, et un mécanisme d'accouplement 17 monté en relation avec le mécanisme d'enroulement 7 du harnais 6 prévu au dos de la place centrale 4. Ainsi, dès qu'un passager s'installe à l'une quelconque des places de la banquette 2, il rend opérationnel, par la mise en place du harnais concerné, l'amortisseur correspondant du dispositif supplémentaire 16, en plus des amortisseurs 13, 14 du dispositif 12, constamment en service.

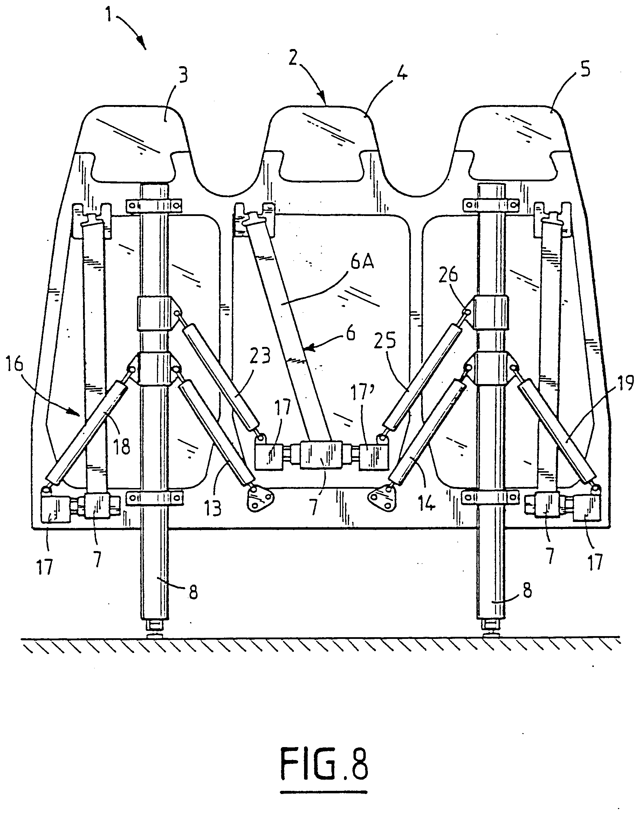

Sur le siège 1 illustré sur la figure 8, un quatrième amortisseur 25 est ajouté au dispositif absorbeur d'énergie 16 de la figure 7. Ce quatrième amortisseur 25 est agencé parallèlement à l'amortisseur 14 et il est disposé entre le support 8 correspondant par une liaison 26 et un mécanisme d'accouplement 17' monté en relation avec le mécanisme d'enroulement 7 du harnais central 6. La liaison entre les deux mécanismes d'accouplement 17 et 17' et le mécanisme d'enroulement 7 s'effectue par exemple par son axe 7A dont les filetages des extrémités présentent alors des sens opposés. Par cet agencement, on augmente encore l'efficacité d'absorption d'énergie du siège.

La banquette du siège 1, du type monolithique, peut être réalisée en carbone par exemple.

Bien que le siège décrit corresponde à un montage sur un hélicoptère, il va de soi qu'il pourrait être adapté à un avion.

## Revendications

1. Siège anti-écrasement à harnais pour aéronef, monté coulissant de façon limitée sur au moins un support au moins sensiblement vertical (8), solidaire de la structure dudit aéronef et associé à au moins un dispositif absorbeur d'énergie (12), disposé entre ledit siège et ladite structure,
caractérisé en ce que :
- il est conformé en banquette (2) définissant une pluralité de places disposées côte à côte et dont chacune est équipée d'un harnais de sécurité (6) ;
- il comporte au moins un dispositif absorbeur d'énergie supplémentaire (16), situé entre ladite structure de l'aéronef et un mécanisme d'accouplement à verrouillage (17) entre la banquette et le dispositif supplémentaire prévu à au moins l'une desdites places ; et
- ledit mécanisme d'accouplement (17) entre ladite banquette et ledit dispositif supplémentaire est commandé par le harnais (6) associé à ladite place.

2. Siège selon la revendication 1,
caractérisé en ce que ledit mécanisme d'accouplement à verrouillage (17) est associé à un mécanisme d'enroulement (7) dudit harnais (6), fixé à ladite banquette et susceptible de provoquer, lorsque ledit harnais est enclenché, le verrouillage dudit dispositif supplémentaire (16) par ledit mécanisme d'accouplement (17), pour rendre ledit dispositif supplémentaire opérationnel.

3. Siège selon la revendication 2,
caractérisé en ce que ledit mécanisme d'accouplement (17) et ledit mécanisme d'enroulement (7) dudit harnais sont prévus au dos de la place correspondante de ladite banquette (2).

4. Siège selon l'une des revendications 2 ou 3,
caractérisé en ce que ledit mécanisme d'accouplement (17) coopère avec un axe rotatif (7A) dudit mécanisme d'enroulement (7), de façon à verrouiller ledit dispositif supplémentaire lorsque ledit harnais est mis en place, entraînant la rotation dudit axe (7A).

5. Siège selon la revendication 4,
caractérisé en ce que ledit mécanisme d'accouplement (17) comprend un boîtier (17A), qui est fixé à la place correspondante de ladite banquette et à l'intérieur duquel est prévu un arbre (17B, 17H) monté sur ledit axe (7A) du mécanisme d'enroulement (7) et apte à verrouiller, par son déplacement en translation sous l'action dudit axe rotatif du mécanisme d'enroulement, ledit dispositif supplémentaire (16).

6. Siège selon la revendication 5,
caractérisé en ce que ledit arbre (17B) du mécanisme d'accouplement (17) s'engage dans une extrémité dudit dispositif supplémentaire (16) pour le verrouiller, lorsque l'axe (7A) dudit mécanisme d'enroulement est entraîné en rotation par le déroulement du harnais.

7. Siège selon la revendication 6,
caractérisé en ce que ledit mécanisme d'accouplement (17) est muni d'un verrou (17K) monté pivotant sur ledit boîtier et apte à bloquer ledit dispositif supplémentaire (16) par l'action d'une lame ressort (17J), solidaire dudit arbre du mécanisme d'accouplement et maintenant un pion dudit verrou, lorsque ledit arbre est déplacé en translation par ledit axe du mécanisme d'enroulement.

8. Siège selon l'une quelconque des revendications précédentes 1 à 7,
caractérisé en ce que ledit dispositif absorbeur d'énergie supplémentaire (16) est relié, par ses extrémités, audit support (8) et audit mécanisme d'accouplement (17), en ce que ledit dispositif absorbeur d'énergie (12) est relié, par ses extrémités, audit support (8) et à ladite banquette (2), et en ce que ledit dispositif absorbeur d'énergie (12) et ledit dispositif absorbeur d'énergie supplémentaire (16) sont définis par des amortisseurs.

9. Siège selon l'une des revendications précédentes 1 à 8,
caractérisé en ce que ladite banquette (2) comprend au moins trois places et elle est montée coulissante sur au moins deux supports sensiblement verticaux (8), deux dispositifs absorbeurs d'énergie étant disposés respectivement entre lesdits supports et le dos de ladite banquette, et au moins deux dispositifs absorbeurs d'énergie supplémentaires étant disposés respectivement entre lesdits supports et lesdits mécanismes d'accouplement (17) prévus au dos des places externes de ladite banquette.

10. Siège selon l'une des revendications précédentes 1 à 9,
caractérisé en ce qu'à chacune des places (3, 4, 5) de ladite banquette, est associé un dispositif absorbeur d'énergie supplémentaire (16), susceptible de coopérer avec le harnais correspondant par l'intermédiaire dudit mécanisme d'accouplement à verrouillage (17).

## Claims

1. An anti-crash seat with harness for an aircraft, mounted with limited sliding on at least one at least substantially vertical support (8), integral with the structure of said aircraft and associated with at least one energy-absorbing device (12), located between said seat and said structure, characterized in that:
- it is shaped as a bench (2) defining a plurality of seating spaces which are located side by side and each of which is equipped with a safety harness (6);
- it includes at least one additional energy-absorbing device (16), situated between said structure of the aircraft and a coupling mechanism (17) with locking between the bench and the additional device provided at least at one of said seating spaces; and
- said mechanism (17) for coupling between said bench and said additional device is controlled by the harness (6) associated with said seating space.

2. The seat as claimed in claim 1, characterized in that said coupling mechanism (17) with locking is associated with a winder mechanism (7) for said harness (6), fixed to said bench and capable, when said harness is buckled, of bringing about the locking of said additional device (16) by said coupling mechanism (17) to render said additional device operational.

3. The seat as claimed in claim 2, characterized in that said coupling mechanism (17) and said winder mechanism (7) for said harness are provided on the back of the corresponding seating space of said bench (2).

4. The seat as claimed in either of claims 2 and 3, characterized in that said coupling mechanism (17) interacts with a rotary spindle (7A) of said winder mechanism (7), so as to lock said additional device when said harness is put on, leading to the rotation of said spindle (7A).

5. The seat as claimed in claim 4, characterized in that said coupling mechanism (17) comprises a housing (17A) which is fixed to the corresponding seating space of said bench and inside which there is provided a shaft (17B, 17H) mounted on said spindle (7A) of the winder mechanism (7) and able, by its translational displacement under the action of said rotary spindle of the winder mechanism, to lock said additional device (16).

6. The seat as claimed in claim 5, characterized in that said shaft (17B) of the coupling mechanism (17) engages in one end of said additional device (16) to lock it, when the spindle (7A) of said winder mechanism is driven in rotation by unwinding the harness.

7. The seat as claimed in claim 6, characterized in that said coupling mechanism (17) is equipped with a lock (17K) mounted so it can pivot on said housing and able to block said additional device (16) by the action of a leaf spring (17J) integral with said shaft of the coupling mechanism and holding a peg of said lock when said shaft is translationally displaced by said spindle of the winder mechanism.

8. The seat as claimed in any one of the preceding claims 1 to 7, characterized in that said additional energy-absorbing device (16) is connected, by its ends, to said support (6) and to said coupling mechanism (17), in that said energy-absorbing device (12) is connected, by its ends, to said support (8) and to said bench (2), and in that said energy-absorbing device (12) and said additional energy-absorbing device (16) are defined by dampers.

9. The seat as claimed in any one of the preceding claims 1 to 8, characterized in that said bench (2) comprises at least three seating spaces and it is mounted so that it can slide on at least two substantially vertical supports (8), two energy-absorbing devices being located respectively between said supports and the back of said bench, and at least two additional energy-absorbing devices being located respectively between said supports and said coupling mechanisms (17) provided on the back of the outer seating spaces of said bench.

10. The seat as claimed in any one of the preceding claims 1 to 9, characterized in that associated with each of the seating spaces (3, 4, 5) of said bench is an additional energy-absorbing device (16) capable of interacting with the corresponding harness via said coupling mechanism (17) with locking.

## Patentansprüche

1. Flugzeug-Unfallsitz, beschränkt gleitend montiert auf mindestens einer wenigstens ungefähr vertikalen, fest mit dem Aufbau des Luftfahrzeuges verbundenen Halterung (8) und mit mindestens einer Energieabsorptionsvorrichtung (12), die zwischen dem Sitz und dem Aufbau angebracht ist,
dadurch gekennzeichnet, daß:
- er als Sitzbank (2) ausgebildet ist, die eine Mehrzahl von nebeneinander angeordneten Sitzplätzen umfaßt, von denen jeder mit einem Sicherheitsgurt (6) ausgestattet ist;
- er mindestens eine Energieabsorptions-Zusatzvorrichtung (16) aufweist, die zwischen dem Aufbau des Luftfahrzeugs und einem Einrastkupplungsmechanismus (17) zwischen der Sitzbank und der Zusatzvorrichtung an mindestens einem der Sitzplätze angebracht ist; und
- der Kupplungsmechanismus (17) zwischen Sitzbank und Zusatzvorrichtung von dem an dem Sitzplatz angebrachten Sicherheitsgurt (6) gesteuert wird.

2. Sitz nach Anspruch 1,
dadurch gekennzeichnet, daß der Einrastkupplungsmechanismus (17) mit einem Aufrollmechanismus (7) des Gurtes (6) verbunden ist, der an der Sitzbank befestigt und dafür ausgelegt ist, beim Einklinken des Gurtes das Verriegeln der Zusatzvorrichtung (16) durch den Kupplungsmechanismus (17) auszulösen, um die Zusatzvorrichtung in Funktion zu bringen.

3. Sitz nach Anspruch 2,
dadurch gekennzeichnet, daß der Kupplungsmechanismus (17) und der Aufrollmechanismus (7) des Gurtes auf der Rückseite des entsprechenden Sitzplatzes der Sitzbank (2) vorgesehen sind.

4. Sitz nach einem der Ansprüche 2 oder 3,
dadurch gekennzeichnet, daß der Kupplungsmechanismus (17) mit einer rotierenden Achse (7A) des Aufrollmechanismusses so zusammenwirkt, daß die Zusatzvorrichtung dann arretiert, wenn der Gurt angelegt wird und dadurch die Achse (7A) in Rotation gesetzt wird.

5. Sitz nach Anspruch 4,
dadurch gekennzeichnet, daß der Kupplungsmechanismus (17) ein Gehäuse (17A) hat, das am entsprechenden Sitzplatz der Sitzbank befestigt ist und in dessen Innern eine auf die Achse (7A) des Aufrollmechanismusses (7) montierte Spindel (17B, 17H) vorgesehen ist, die dafür ausgelegt ist, durch Verschiebung bei Betätigung der drehenden Achse des Aufrollmechanismusses die Zusatzvorrichtung (16) zu verriegeln.

6. Sitz nach Anspruch 5,
dadurch gekennzeichnet, daß die Spindel (17B) des Kupplungsmechanismusses (17) in ein Endstück der Zusatzvorrichtung (16) eingreift, um sie zu verriegeln, wenn die Achse (7A) des Aufrollmechanismusses durch das Abrollen des Gurtes in Rotation gebracht wird.

7. Sitz nach Anspruch 6,
dadurch gekennzeichnet, daß der Kupplungsmechanismus (17) mit einem Riegel (17K) versehen ist, der auf dem Gehäuse drehbar angebracht und dafür ausgelegt ist, die Zusatzvorrichtung (16) durch Betätigung einer Blattfeder (17J), die fest mit der Spindel des Kupplungsmechanismusses verbunden ist, und eines Zapfens des Riegels zu sperren, wenn die Spindel durch die Achse des Aufrollmechanismusses verschoben wird.

8. Sitz nach einem der vorhergehenden Ansprüche 1 bis 7,
dadurch gekennzeichnet, daß die Energieabsorptions-Zusatzvorrichtung (16) an ihren Enden mit der Halterung (8) und dem Kupplungsmechanismus (17) verbunden ist, daß die Energieabsorptionsvorrichtung (12) an ihren Enden mit der Halterung (8) und der Sitzbank (2) verbunden ist und dadurch, daß die Energieabsorptionsvorrichtung (12) und die Energieabsorptions-Zusatzvorrichtung (16) durch Stoßdämpfer gebildet werden.

9. Sitz nach einem der vorhergehenden Ansprüche 1 bis 8,
dadurch gekennzeichnet, daß die Sitzbank (2) mindestens 3 Plätze hat und gleitend auf mindestens zwei ungefähr vertikalen Halterungen (8) montiert ist, wobei zwei Energieabsorptionsvorrichtungen jeweils zwischen der entsprechenden Halterung und der Rückseite der Sitzbank angebracht sind und mindestens zwei Energieabsorptions-Zusatzvorrichtungen jeweils zwischen der entsprechenden Halterung und dem entsprechenden Kupplungsmechanismus (17) auf der Rückseite der äußeren Plätze der Sitzbank vorgesehen sind.

10. Sitz nach einem der vorhergehenden Ansprüche 1 bis 9,
dadurch gekennzeichnet, daß mit jedem der Sitzplätze (3, 4, 5) der Sitzbank eine Energieabsorptions-Zusatzvorrichtung (16) verbunden ist, die dafür ausgelegt ist, mit dem entsprechenden Gurt mit Hilfe des Einrastkupplungsmechanismusses (17) zusammenzuwirken.
